# EUROPEAN PATENT SPECIFICATION

(11) **EP 0 767 810 B1**
(45) Date of publication and mention of the grant of the patent: **02.04.2003**
(21) Application number: 95924746.1
(22) Date of filing: 29.06.1995
(51) Int. Cl.: C08G 83/00, C08G 85/00, C08H 5/00, B29C 44/00

(54) **STARCH GRAFT COPOLYMER FROM PRIME STARCH**
STÄRKEPFROPFCOPOLYMER HERGESTELLT AUS NATURSTÄRKE
COPOLYMERE GREFFE D'AMIDON OBTENU A PARTIR D'AMIDON NATIF

(30) Priority: 29.06.1994 US 267193
(43) Date of publication of application: 16.04.1997
(73) Proprietor: UNI-STAR INDUSTRIES, LTD., Canton, IL 61520 (US)
(72) Inventor: FISK, Donald, Cuba, IL 61427 (US)
(74) Representative: Graf, Helmut, Dipl.-Ing.
(86) International application number: PCT/US95/08181
(87) International publication number: WO 96/000746

(56) References cited:
- WO-A-94/05492
- DE-A- 4 200 241
- GB-A- 1 568 688
- US-A- 3 332 897
- US-A- 3 740 362
- US-A- 3 781 232
- US-A- 4 005 040
- US-A- 4 026 849
- US-A- 4 863 655
- US-A- 5 035 930
- US-A- 5 043 196

## Description

This invention relates to starch graft copolymers and, more particularly, to the use of prime starch for making starch graft copolymers and the use of the starch graft copolymers made from prime starch in extrusion and injection molding operations.

Starch graft copolymers are a class of plastic material and are made from starch and a synthetic polymer. U.S. Patent No. 4,026,849 teaches making a starch graft copolymer from starch obtained from any number of plant sources and a thermoplastic polymer such as polystyrene, poly(methyl acrylate), poly(butyl acrylate), poly(methyl methacrylate), or a combination thereof. The '849 patent also teaches that starch graft copolymers can be extruded or injection molded.

GB-A-1 568 688 teaches a method for making a starch graft copolymer from either granular or gelatinized starch, wherein an acid manganic polyphospat initiator is used as an initiator in the graft copolymerization reaction.

Prime starch is starch extracted from a starch bearing plant through a wet milling process before the starch has been subjected to a drying process. In a conventional corn wet milling operation, corn kernels are added to water and subjected to a multistage process to separate the starch form the gluten, oil and hull. The resulting starch is in an aqueous slurry which is conventionally subjected to a dewatering step and a drying step. The dewatering step is typically a pressure and/or vacuum process while the drying step is typically a hot air process. The term "prime starch" is used in the specification and claims means starch prior to the drying step. The prime starch can be either dewatered or in slurry form. Dewatered prime starch is conventionally referred to as starch cake. Prime starch in either the cake or slurry form is generally not available commercially.

Starch graft copolymers as well as starch itself have recently come into the spotlight due to their biodegradable nature. With mounting pressure on manufacturers to produce biodegradable products, more and more manufacturers are seeking alternative sources for conventional synthetic polymers. Natural polymers such as cellulose and starch have been the main contenders as replacements for the synthetic polymers.

The use of starch and starch graft copolymers in foamed products is taught in WO 94/05492, DE 42 00 241 A and US-A-4 005 040.

Molding and/or extrusion of plastic materials is a conventional process wherein a solid plastic material is softened under heat and pressure to a molten state and then shaped while in the molten state. The shaped product is then hardened by cooling. For example, injection molding typically employs a single screw extruder to soften the plastic material and force the softened plastic material into a mold wherein it hardens.

It has now been discovered that a shaped article made from a starch graft copolymer using prime starch has greater ductility and flexibility than a shaped article made from a starch graft copolymer using conventional dried starch. It has also been found that less energy is needed to extrude a starch graft copolymer made from prime starch than a starch graft copolymer made from conventional dried starch. These attributes of a shaped article made from a starch graft copolymer of prime starch are obtained without the loss of biodegradability, i.e. a shaped article made from a starch graft copolymer of prime starch has comparable biodegradability to a shaped article made from a starch graft copoylmer of conventional dried starch. Furthermore, prime starch graft copolymers produce a molded product with a more uniform product composition than starch graft copolymers made from conventional dried starch.

It is not completely understood why prime starch produces a starch graft copolymer with physical attributes which are markedly different from conventional dried starch. It is speculated that, during drying, closely associated regions are formed within the starch granule and that these regions do not become fully disassociated upon rehydration. These associated regions in the starch granule may cause an obstruction to a uniform reaction with the synthetic monomer during the grafting reaction thereby resulting in the differences between the starch graft copolymer of prime starch and the starch graft copolymer of conventional dried starch. Whatever the reason, the physical differences between the two starch graft copolymers are real and measurable.

In order to make a starch graft copolymer in accordance with the present invention, the moisture level of the prime starch cannot be below 13.5% by weight and, preferably, is not below 17% by weight. The moisture level of the prime starch used to make the starch graft copolymer in accordance with the present invention is more preferably 20% by weight and above.

Any source of prime starch can be employed in the present invention. Suitable sources include maize, sorghum, wheat, potato, barley, tapioca and rice. The preferred sources are maize and wheat.

The prime starch used in the present invention can be either in slurry form or dewatered cake form. In either case, it is preferred that the reaction between the starch and the synthetic polymer take place in an aqueous medium. In fact, one of the novel aspects of the present invention is that a starch graft copolymer can be made without the need for drying the starch. Thus, a step routinely thought to be necessary is eliminated from the overall process for making starch graft copolymers.

Starch graft copolymers are made by grafting a monomer onto the granular starch. Suitable monomers for use in the present invention include styrene, methyl methacrylate, methyl acrylate, butyl acrylate, butadiene, isoprene, and combinations thereof. Preferably, methyl acrylate, butyl acrylate and blends of methyl acrylate and butyl acrylate are used as the monomers.

Many methods are known for the initiation of graft polymerization, e.g., ceric ion, cobalt-60 irradiation, electron beam irradiation, ozone, ferrous ion-peroxide, or other redox systems. Any of these known methods will yield the composite compositions of the instant invention. Good results have been obtained with a ceric ion as the initiator.

When using a ceric ion as an initiator, it has been found that ceric ammonium nitrate is a good source of ceric ion. The ceric ammonium nitrate can be added either in one step or proportionally over a period of time by means of a solution of nitric acid wherein the ceric ammonium nitrate has been dissolved.

The grafting reaction is conducted in a conventional manner using conventional equipment to produce a starch graft copolymer for use in the present invention. A suitable method for making the starch graft copolymer for use in the present invention is to form an aqueous slurry of the granular prime starch to a Baume of 2 to 30, preferably about 20 Be. The water used to make the slurry is distilled or deionized. In order to remove dissolved oxygen, a nitrogen purge is used for about 30 minutes. Alternatively, some other method, such as a vacuum, is used to remove the oxygen from the water.

During the oxygen removal step, the slurry is heated to 15°C to 55°C and, more preferably, 25°C to 45°C. The temperature of the slurry throughout the reaction is maintained below the gelatinization temperature of the starch and, generally, below 60°C.

Next, the monomer is added to the deoxygenated slurry. The purge/vacuum no longer needs to be maintained; however, oxygen should not be introduced into the reaction vessel. The monomer is stirred into the slurry so as to uniformly distribute it throughout the slurry. The amount of monomer added is calculated in a conventional manner so as to provide an add-on level in accordance with the present invention. The add-on level is 3% to 90% by weight and, preferably, 20% to 60% by weight.

The term "add-on level" as used in the specification and claims means the amount by weight of synthetic monomer present in the copolymer based on the total weight of the copolymer.

The pH of the slurry is adjusted to under 2.0 to obtain the maximum grafting efficiency. Good results have been obtained by using nitric acid. The pH adjustment can be done at any time prior to the addition of the initiator. Preferably, the pH of the water is adjusted to below 2.0 prior to the addition of the starch to the water.

Next, an initiator of ceric ammonium nitrate is added in a 1N nitric acid solution over a period of about ½ hour. Good results have been obtained with using a ratio of about one mole of ceric ammonium nitrate to 50 to 250 anhydroglucose units (AGU) of starch.

The reaction is allowed to proceed for a period of time to obtain the add-on level of polymer in accordance with the present invention.

Finally, the reaction mixture is neutralized and .dewatered and the resulting starch graft copolymer is dried.

In order to increase the grafting efficiency, the monomer is added after the addition of the initiator rather than before. By adding the monomer after the initiator, the grafting efficiency can be increased by as much as about 20%. When adding the monomer after the initiator, there is a limited amount of time from when the initiator is added to when the monomer has to be added. The initiator, and especially ceric ammonium nitrate, is a strong oxidizer and in the acid environment will soon start to break down the starch. The maximum length of time between addition of the initiator and the monomer will vary and can readily be determined by one of skill in the art.

It has been found that the reaction between the prime starch and the monomer can take place in the barrel of an extruder. The preferable extruder type is a co-rotating twin screw extruder with heating/cooling of each zone separately controlled. Sufficient barrel ratio (L/D) is necessary to promote polymerization in the extruder barrel. Starch cake as it is taken from a dewatering step at a starch wet milling plant, is fed into the extruder and is immediately subjected to a vacuum while being mixed in the extruder to remove the oxygen. The initiator in dilute acid is added, mixed briefly but intensively and then the monomer is added and also mixed briefly and intensively. The material is transported down stream in the extruder and at the end of the barrel, a vacuum is used to pull off any unreacted monomer and surplus water vapor. These gases are passed through a scrubber and the monomer reused and the condensed water, being pure, is used to dilute the acid/initiator mix. This water can also serve to help control reaction temperature by controlling water content of the mix. Next the neutralizer is added and intensively mixed and the grafted finished product is expelled from the extruder, sized, and dried. This system cuts costs by reducing steps in the grafting procedure, eliminates the expensive disposition of effluents, reduces potential contaminants from wet milling slurry water and, comparatively, is much safer for the operators.

It has been found that a lower temperature must be employed to dry a starch graft copolymer made from a prime starch. Too high a temperature will cause the starch graft copolymer to gelatinize. Preferably, the drying temperature is 35°C to 40°C.

Using prime starch decreases the amount of water added into the process and shortens the degassing step. In the case of a slurry, the use of additional water can be completely eliminated. Filtration of the grafted prime starch product reveals that the product dries into a coarser powder than conventional dried or modified corn starch products after sifting. A different material behavior has been noticed in several processing steps utilizing the prime starch as compared to conventional dried starch: (a) a smoother, more uniform slurry with much less free water is obtained; (b) the filtration requires more pressure to reduce the moisture content; (c) the material tends to gelatinize at a lower temperature while being dried; and (d) compounding formulations require less extruder torque. Additionally, it is believed that the grafted material made with prime starch is a more uniformly grafted material than grafted material made with conventional dried starch. Specifically, it has been found that the grafted material made with prime starch does not stick to the walls of the reaction vessel or the impeller of the reaction vessel as much as the grafted material made with dried starch. These characteristics mean that the starch graft copolymer of the present invention is easier, and thus less costly, to process than a starch graft copolymer made with dried starch.

It has also been found that the starch graft copolymer made with prime starch will convert more easily to a more cohesive molten state. In rare instances, hard-to-remove parts in the mold cavity would break away from the rest of the part and remain in the mold cavity. It has been discovered that the next shot (subsequent filling of the cavity with molten material) results in the remaining portion from the previous cycle adhering to the new shot and, consequently, the entire part is ejected from the mold. In all instances where a starch graft copolymer of conventional dried starch was utilized in the same formulation, and extruded into this same mold, this phenomenon did not occur.

The extrusion and injection molding of the prime starch graft copolymer is done in a conventional manner using conventional equipment. The prime starch grafted copolymer is compounded in a conventional manner using conventional equipment. In one example, a prime starch graft copolymer at a moisture content of about 20% was compounded using a twin screw extruder wherein the barrel was at a temperature of 200°F (95°C) and had a length to diameter ratio of 14:1. The extruder was operated at 30 rpm. The prime starch graft copolymer was compounded with about 6 parts of plasticizer and about 0.5 parts of an internal lubricant based on 100 parts by weight prime starch graft copolymer. Compounding of plastic materials is a conventional step in which various additives are combined with the polymeric material so as to form a uniform material suitable for injection molding or other processing by extrusion or other conventional means.

Pellets were produced at the outlet or nozzle of the twin screw extruder and air dried down to about 5% moisture. These pellets are the feed stock to the extruder/injection molding machine. The pellets can be passed through the compound extruder again if they are not uniform.

In order to injection mold the pellets, conventional equipment is used in a conventional manner. In this instance, the injection molding machine had an extrusion barrel operated at 150 rpm at 160°C with a length to diameter ratio of 24:1. There was a lapse of about 30 seconds between shots to the mold. The mold itself was a single cavity mold. The molded product formed by the cavity was a cereal bowl. Each shot had a residence time in the barrel of 1 to 2 minutes.

It was noted that the molded product made from the extruder with a starch graft copolymer of prime starch had a smooth homogeneous interior typical of synthetic polymers rather than the non-uniform interior which is typical of extruded products made from starch graft copolymers of conventional dried starch.

It has been discovered that a good foamed product can be made by using a starch graft copolymer made from prime starch. It has been found that a foamed product made from a starch graft copolymer of prime starch has good structural stability and toughness while still being biodegradable. In fact, the foamed product of the present invention has been found to more closely resemble a foamed product made from synthetic material than the foamed products made from starch components used heretofore.

Broadly, the present invention can be used to make foamed packaging material by extruding a starch graft copolymer made from prime starch having an add-on level of 5% to 60% by weight in the presence of a blowing agent at a temperature of 100°C to 250°C and a moisture content of 10% to 20% by weight dry copolymer, thereby fluidizing said starch graft copolymer and causing said fluidized starch graft copolymer to expand and form cells therein; and cooling said expanded starch graft copolymer to form a solid matrix of starch graft copolymer with cells therein.

The add-on level is preferably 10 to 50 weight percent by weight copolymer and, more preferably, 10 weight percent to 40 weight percent by weight copolymer. Although a foamed product can be made in accordance with the present invention with a starch graft copolymer that has an add-on level above about 60 weight percent by weight, such a product has poor biodegradability characteristics. It has also been found that a foamed product can be made with a starch graft copolymer having an add-on level below 5%; however, such a material does not have the resiliency and toughness of the material made with a higher add-on level and, thus, it is preferred that the add-on level be 10% and above. It has also been found that a foamed product can be made from a starch graft copolymer using water instead of a blowing agent; however, the product has non-uniform cells and is an unacceptable commercial foamed product.

One of the novel features of the foamed product made in accordance with the present invention is that, at add-on levels of 50% to 60%, it has been found that this material will absorb hydrocarbon materials, such as oil and gasoline, without the starch graft copolymer breaking down. This makes the foamed product of the present invention suitable for use as a packaging material with hydrocarbon containers where there is the possibility of spillage or leakage from the container as well as a packaging material for use in booms and pillows used to absorb contaminants, such as oil from water.

The foamed product of the present invention is especially suitable as a packaging material to replace foamed polystyrene because it has properties more similar to foamed polystyrene than other foamed modified and unmodified starch products. Specifically, the foamed starch graft copolymer of the present invention is readily moldable in injection molding machines to produce a solid molded packaging material used to securely hold a product inside a container.

The product of the present invention has been found to have good stability even when subject to the heat and moisture often associated with shipping goods to different parts of the world. This is especially true at the higher add-on levels of 20% to 60%.

Another novel aspect of the present invention is that at the lower add-on levels, 5% to 20%, a more processable starch graft copolymer is made. The reason for the processability of the starch graft copolymer at lower add-on levels is not completely understood. It is thought that such a lower level of add-on is able to be successfully processed through an extruder without excessive torque because the material of the present invention has a lower glass transition and gelatinization temperature.

The prime starch used to make the starch graft copolymer for the foamed product is preferably selected from the group consisting of common starch, aedu starch, hydroxypropylated common starch, high amylose starch, hydroxypropylated high amylose starch, and blends thereof. In all cases, the starch used to make the starch graft copolymer of the present invention is a granular starch, i.e. not gelatinized.

Preferably, the granular high amylose starch has an apparent amylose content, as measured spectrophotometrically with iodine, of 50% to 80% and, more preferably, is 50% to 70%. Good results have been obtained with commercial high amylose starch having an amylose content of 50% to 70%.

The granular common starch is conventional starch having an amylose content about 30%.

The aedu starch employed in this invention may be obtained from a starch bearing plant with an amylose extender dull (aedu) homozygous genotype. The term aedu starch means not only starch obtained from a starch bearing plant that has an aedu homozygous genotype aeaedudu but also translocations, inversions and other variants that contain or that can be described as containing the aedu genotype. The amylose extender (ae) gene had been available only as a recessive gene. U.S. Patent No. 5,004,864, however, discloses the discovery of a dominant amylose extender (AE) gene. Those of skill in the art will recognize that the dominant amylose extender gene may be used to obtain aedu starch.

The degree of substitution (DS) of the granular hydroxypropylated high amylose starch used in the present invention is 0.01 to 0.24. The degree of substitution is the number of hydroxypropyl groups per anhydroglucose units (AGU). More preferred, the hydroxypropylated high amylose starch for use in the present invention has a DS of 0.1 to 0.18. Good results have been obtained with a hydroxypropylated high amylose starch having an apparent amylose content of about 50% and a DS of about 0.16 and with a hydroxypropylated high amylose starch having an apparent amylose content of about 70% and a DS of about 0.19.

Suitably, the granular hydroxypropylated common starch for use in the present invention has a DS of 0.5 to 0.25. More preferably, the hydroxypropylated common starch has a DS of 0.7 to 0.15. Good results have been obtained with a hydroxypropylated common starch having a DS of 0.9 to 0.12.

The granular hydroxypropylated starch of the present invention, either common or high amylose, is made in a conventional manner. Typically, the slurry of prime starch is treated with an alkali, such as sodium hydroxide, and propylene oxide is added to the slurry to form the product.

Where a chemical blowing agent is used, the chemical blowing agent is mixed with the starch graft copolymer and then the admixture is extruded. Where a gaseous blowing agent is used, the gas is mixed with the fluid starch graft copolymer at the nozzle of the extruder. Such mixing is conducted in a conventional manner.

Blowing agents, sometimes referred to as foaming agents, are substances that produce the cellular structure in the fluidized plastic composition. Conventional blowing agents include fluorocarbons, nitrogen gas, hydrazine derivatives, trihydrazide triazine, 5-phenyl tetrazole, p-toluene sulfonyl semicarbazide, modified azodicarbonamide, and azodicarbonamide. Chemical blowing agents are a class of blowing agents which are solids or liquids at room temperature and, upon heating, release a gas. Typically, they are employed by mixing the chemical blowing agent with the solid plastic material and heating the mixture while maintaining the mix under pressure. Heating fluidizes the plastic material and causes the blowing agents to release a gas. The gas forms bubbles or cells in the fluid plastic material. The mixture is maintained under pressure until it is placed into a mold where the gas expands and in turn causes the fluid plastic material to expand. Upon solidifying, the cell structure remains. Different blowing agents release gas at different temperatures and the choice of blowing agent depends on the processing conditions, plastic material and the size of the desired gas cells.

Chemical blowing agents have the advantages over gaseous blowing agents in that they can be added to the solid plastic material prior to heating. Gaseous blowing agents such as nitrogen and some fluorocarbons must be injected into the already fluidized plastic material.

The amount of chemical blowing agent used in the present invention is 0.001% to 0.015% by weight dry copolymer and, more preferably, 0.003% to 0.006% by weight copolymer.

The blowing agent used in the present invention must be compatible with the temperature used during extrusion, 100°C to 250°C. Suitable blowing agents include azodinitriles, azodicarbonamides and gases such as carbon dioxide, nitrogen, helium and air.

The foamed product made in accordance with the present invention has a bulk density of less than 32,03 kg/m³ (2.0 pounds per cubic foot).

In forming a foamed product in accordance with the present invention, not all of the biodegradable material used to make the foamed product need be the starch graft copolymer of the present invention. Specifically, it has been found that mixtures, such as 25% starch graft copolymer and 75% common wheat starch, produce a good biodegradable foamed product.

These and other aspects of the present invention may be more fully understood by reference to the following examples.

### EXAMPLE 1

This example illustrates making a starch graft copolymer from a prime starch in slurry form.

Using a conventional common corn starch slurry as obtained from a wet milling operation prior to dewatering and drying, the solids content of the slurry was adjusted to 20% and the pH of the slurry was adjusted to 2-3 with dilute (1N) nitric acid. The slurry contained 20,41 kg (45 pounds) of dry starch. The slurry was subjected to a vacuum for 10 minutes to remove oxygen and then the temperature was maintained at 80°F (27°C). Next, 16,69 kg (36.8 pounds) of monomer was added to the slurry. The monomer added was methyl acrylate. Then the initiator, ceric ammonium nitrate, in a 1N nitric acid solution was added at a level of one mole of ceric ammonium nitrate to 100 AGU. The initiator was added over 5 minutes. After a period of 30 to 40 minutes, sodium hydroxide was added to the system to adjust the pH to neutral. Finally, the reaction product was dewatered and dried.

### EXAMPLE 2

This example illustrates the reduced pressure and torque necessary for a starch graft copolymer made from prime starch compared to a starch graft copolymer made with conventional dried corn starch.

A starch graft copolymer made from prime common corn starch in accordance with Example 1 was compared to a starch graft copolymer made from conventional dried common corn starch. The results of this test are listed below:

| | Prime 50:50 | Dried 50:50 | Prime 59:41 | Dried 59:41 |
|---|---|---|---|---|
| Moisture (%) | 10.2 | 10.2 | 16 | 18 |
| Torque (M-g) | 5464.6 | 8174 | 4287.2 | 5455 |
| Pressure (psi) | 5576.6 | 6877.5 | 4527.7 | 5049.8 |

The add-on levels are listed at the top of the column as a ratio of the weight percent of starch to synthetic polymer.

These materials were extruded at a moisture level of 5-6%. The extruder had a barrel length to diameter ratio of 11:1 and used a twin screw extruder operated at 30 rpm. The temperature along the length of the barrel was 190°F (88°C) at entry, 210°F (99°C), 220°F (104°C) and 230°F (110°C) at exit.

### EXAMPLE 3

This example compares various physical attributes of a starch graft copolymer made in accordance with the present invention with a starch graft copolymer made with conventional dried starch.

Starch graft copolymers made from prime starch and a methyl acrylate monomer were prepared in accordance with Example 1 above to produce add-on levels of 41%, 50% and 59%.

Three starch graft copolymers made from conventional, dried starch and methyl acrylate were prepared using the procedure in Example 1 above and having add-on levels of 41%, 50% and 59%.

Each of the starch graft copolymers were tested for Young's modulus, tensile strength, elongation and tear resistance. The test results are given below:

| | Young's Modulus | Tensile Strength (MPa) | Elongation (%) | Tear Strength (N/mm) |
|---|---|---|---|---|
| Prime Starch | | | | |
| 41% | 212.8 | 11.05 | 54.75 | 2.030 |
| 50% | 189.6 | 10.84 | 62.54 | 3.833 |
| 59% | 191.8 | 10.82 | 69.25 | 4.289 |

| Conventional Dried Starch | | | | |
|---|---|---|---|---|
| 41% | 356.7 | 14.08 | 15.85 | 1.719 |
| 50% | 235.4 | 15.03 | 51.33 | 3.591 |
| 59% | 270.5 | 13.33 | 28.56 | 3.242 |

The flexibility or brittleness was determined by Young's Modulus test.

The tensile strength was determined by using two inch gauge length samples with a 50 mm/min, crosshead speed.

The elongation was determined by the Trouser test, again on a two inch gauge length. The Young's Modulus test, Trouser test, and tensile strength test were done in a conventional manner using conventional equipment.

The samples of both the prime starch graft copolymer and the conventional dried starch graft copolymer were prepared by extruding the copolymers in a single screw extruder under the following conditions: the moisture levels were at 16% for the 41% add-on formulation, 10% for the 50% add-on formulation, and 16% for the 59% add-on formulation; the barrel length to diameter ratio was 20:1; the entry temperature was 88°C; the exit temperature was 106°C; and the speed was at 30 rpm. For the 50% add-on level, a ribbon measuring about 1" x 4" was used for the test. For the 59% add-on level, a ribbon measuring about 1.1" x 4" was used; and for the 41% add-on level, the ribbon measured 1.6" x 4".

As can be seen, the ductility and tear strength of the prime starch graft copolymer was superior to that of the conventional dried starch graft copolymer.

This example also illustrates that a prime starch graft copolymer with a higher percentage of starch, i.e. a lower add-on level, has the same physical properties as a conventional dried starch graft copolymer with less starch, i.e. with a higher add-on level. This means that using prime starch produces a product which is more biodegradable than the starch graft copolymer made from conventional dried starch.

As can be seen from the above data, the starch graft copolymer made with conventional dried starch at 50% and 59% starch levels had a dramatic decrease in properties when compared with starch graft copolymer made with identical starch levels of prime starch. In fact, an increase in tear strength was observed in the higher starch level (59%) graft copolymer ribbon made with prime starch, while the opposite is true with the dried starch material.

### EXAMPLE 4

This example illustrates the melt flow index of a starch graft copolymer made from prime starch as compared to a starch graft copolymer made from conventional dried starch.

In accordance with Example 1 above, a prime starch graft copolymer was made with a methyl acrylate monomer to an add-on level of 45%. The melt flow of these materials as well as a conventional polyethylene were as follows:

| | Melt Flow |
|---|---|
| Polyethylene Index Rating of 100 | 12 inches |
| Prime Starch Graft Copolymer | 13 inches |
| Conventional Dried Starch Graft Copolymer | 11 inches |

The melt flow index was measured by injection molded spiral melt flow test.

These data evidence the fact that the starch graft copolymer made from prime starch has flow characteristics comparable to conventional synthetic polymers.

### EXAMPLE 5

This example illustrates making a foamed product in accordance with the present invention.

Formulations of the starch graft copolymers identified in the Table below were extruded through a Haake Buchler HBI System 90 torque rheometer equipped with a single screw extruder. The barrel temperatures during extrusion were 140°C - 150°C - 160°C (Feed to Die) and the screw was run at 125 rpm.

Each formulation contained 0.6% by weight of a blowing agent, activated azodicarbonamide sold under the name Celogen® 754 by Uniroyal. Formulation #2, in the Table below, also contained 1% of a processing aid, octoglycerol monooleate, sold under the name Santone® 8-1-0 by Van Der Bergh Food Ingredient Group. Formulation #3, in the Table below, also contained 4% of a processing aid, polyglycerol ester. Each of the starch graft copolymers were made in accordance with Example 1 above. Methyl acrylate was used to make the copolymer. The specific add-on level is reported in the Table below.

**TABLE**

| Formulation | Starch | Add-on Level (%) | Moisture Content (%) |
|---|---|---|---|
| 1 | Common/aedu | 10 | 17 |
| 2 | Common/aedu | 10 | 17 |
| 3 | Common | 20 | 15 |
| 4 | Common | 20 | 15 |
| 5 | HPHA-70% | 10 | 16 |
| 6 | Common/HPHA-50% | 10 | 16 |

Each starch used in this example was obtained from maize. Each of the terms and abbreviations used for formulations 1-6 in the Table above are as follows:
(1) Common/aedu stands for a mix of common prime and aedu prime starch in a weight ratio of 50:50 which was first mixed and then reacted with the synthetic monomer;
(2) Common stands for a common prime starch (28% apparent amylose) obtained directly from a corn wet milling operation which has not been subjected to a drying sep;
(3) HPHA-70% stands for a hydroxypropylated high amylose starch having an apparent amylose content of 70% and a degree of substitution of about 0.18.
(4) Common/HPHA-50% stands for a 50:50 by weight mix of a common prime starch (28% apparent amylose) and a hydroxypropylated high amylose prime starch having an apparent amylose content of about 50% and a DS of about 0.155. First, the two starches were mixed and then the grafting reaction was carried out. The moisture content was that of the copolymer prior to extrusion.

As known by those of skill in the art, the use of processing agents for an extrusion is dictated by the type of equipment used, e.g. single screw vs. double screw, as well as the quality of the end product. A foamed product in accordance with the present invention can also be made without the use of processing aids.

### EXAMPLE 6

The foamed products formed in Example 5 were extruded into flat sheets and tested for cushioning and durability. Each one was found to be durable and provide cushioning comparable to conventional foamed products made out of synthetic materials.

### EXAMPLE 7

This example illustrates using the foamed product made in accordance with the present invention to absorb liquid hydrocarbons.

A foamed product is made in accordance with Example 5 and shaped into a conventional "peanut" style product. The "peanut" shaped foamed product of the present invention is then packed into a boom made of nylon netting. The peanut packed boom is then floated on top of the water where the water has a hydrocarbon, such as gasoline, floating on top. The gasoline is absorbed by the peanut made in accordance with the present invention

### EXAMPLE 8

This example illustrates using the foamed product made in accordance with the present invention for absorbing liquid hydrocarbon.

A foamed product made in accordance with Example 5 is shaped into a "peanut" form. At a site where oil has spilled from a 55-gallon drum onto the ground, handfuls of the foamed peanut of the present invention are tossed on top of the oil and a broom is used to stir the peanuts into the oil. In this manner, the oil is absorbed by the peanuts of the present invention.

## Claims

1. Process for making a starch graft copolymer, wherein starch is reacted with a monomer, **characterized in that** prime starch is used for the starch, said prime starch being selected from the group consisting of maize, sorghum, wheat, potato, barley, tapioca and rice, wherein said prime starch is starch cake or slurried starch cake obtained in a wet milling process prior to a drying process.

2. Process as claimed in claim 1, wherein the monomer is selected from the group consisting of styrene, methyl acrylate, butyl acrylate, butadiene, isoprene and combinations thereof.

3. Process for preparing a plastic article by extruding a starch graft copolymer, which is obtained by reacting starch with a monomer, **characterized in that** a starch graft copolymer made with prime starch is used, said prime starch being selected from the group consisting of maize, sorghum, wheat, potato, barley, tapioca and rice, wherein said prime starch is starch cake or slurried starch cake obtained in a wet milling process prior to a drying process.

4. Process as claimed in claim 3, wherein the monomer is selected from the group consisting of styrene, methyl acrylate, butadiene, isoprene and combinations thereof.

5. A starch graft copolymer comprising starch and a monomer, **characterized in that** the starch is a prime starch selected from the group consisting of maize, sorghum, wheat, potato, barley, tapioca and rice, wherein said prime starch is starch cake or slurried starch cake obtained in a wet milling process prior to a drying process.

6. The copolymer of claim 5, wherein the monomer is selected from the group consisting of styrene, methyl acrylate, butyl acrylate, butadiene, isoprene and combination thereof.

7. A biodegradable foamed product comprising a granular prime starch onto which has been grafted a thermoplastic polymer selected from the group consisting of poly(methyl acrylate), poly(butyl acrylate), poly(styrene), poly(methyl methacrylate), and blends thereof, wherein the prime starch is selected from the group consisting of maize, sorghum, wheat, potato, barley, tapioca and rice and wherein the thermoplastic polymer is present in an amount of 3 to 60 weight percent by weight of copolymer, said foamed product having a closed cell structure making said product suitable as a packaging material, wherein said prime starch is starch cake or slurried starch cake obtained in a wet milling process prior to a drying process.

8. The biodegradable foamed product of claim 7 wherein the granular starch is selected from the group consisting of common starch, aedu starch, hydroxypropylated common starch, hydroxypropylated high amylose starch, and blends thereof.

9. The biodegradable foamed product of claim 7 wherein the polymer is present in an amount of 10 to 50 weight percent by weight copolymer.

10. A method for using a starch graft copolymer to make a foamed product comprising the steps of:
(a) forming a composition comprising a starch graft copolymer and a blowing agent, said starch graft copolymer having an add-on level of 30% to 60% and being made from a prime starch, wherein the prime starch is selected from the group consisting of maize, sorghum, wheat, potato, barley, tapioca and rice, wherein said prime starch is starch cake or slurried starch cake obtained in a wet milling process prior to a drying process;
(b) heating the composition of starch graft copolymer and blowing agent to form a fluid mix and to form cells in said fluid mix; and
(c) solidifying said fluid mix to form a solid foamed product.

## Patentansprüche

1. Verfahren zur Herstellung eines Stärkepfropfcopolymers durch Reagieren von Stärke mit einem Monomer, **dadurch gekennzeichnet, daß** Prime- oder Naturstärke (prime starch) als Stärke verwendet wird, und daß die Naturstärke ausgewählt ist aus der Gruppe Mais, Soja, Weizen, Sorghum, Zuckerhirse, Weizen, Kartoffeln, Gerste, Tapioka und Reis, wobei die erwähnte Naturstärke ein Stärkekuchen oder ein breiartiger Stärkekuchen ist, der in einem Feuchtmahlprozess vor dem Trockenprozess erhalten wird.

2. Verfahren nach Anspruch 1, **dadurch gekennzeichnet, daß** das Monomer aus der Gruppe umfassend Styrol, Methylacrylat, Butylacrylat, Butadien, Isopren oder Kombinationen hiervon ausgewählt ist.

3. Verfahren zum Herstellen eines plastischen Artikels durch Extrudieren eines Stärkepfropfcopolymers, welches durch Reagieren von Stärke mit einem Monomer erhalten ist, **dadurch gekennzeichnet, daß** ein Stärkekopfcopolymer hergestellt aus Prime- oder Naturstärke verwendet wird, wobei die Naturstärke ausgewählt ist aus der Gruppe Mais, Soja, Weizen, Sorghum, Zuckerhirse, Weizen, Kartoffeln, Gerste, Tapioka und Reis, und wobei die Naturstärke ein Stärkekuchen oder ein breiartiger Stärkekuchen ist, der in einem Feuchtmahlprozess vor dem Trockenprozess erhalten wird.

4. Verfahren nach Anspruch 3, **dadurch gekennzeichnet, daß** das Monomer aus der Gruppe bestehend aus Styrol, Methylacrylat, Butadien, Isopren und Kombinationen hiervon ausgewählt ist.

5. Ein Stärkepfropfcopolymer bestehend aus Stärke und einem Monomer, **dadurch gekennzeichnet, daß** die Stärke eine Prime- oder Naturstärke ist, ausgewählt aus der Gruppe umfassend Mais, Soja, Weizen, Sorghum, Zuckerhirse, Weizen, Kartoffeln, Gerste, Tapioka und Reis, und daß die Naturstärke ein Stärkekuchen oder ein breiartiger Kuchen ist, der in einem Feuchtmahlprozess vor dem Trockenprozess erhalten wird.

6. Das Copolymer nach Anspruch 5, **dadurch gekennzeichnet, daß** das Monomer aus der Gruppe bestehend aus Styrol, Methylacrylat, Butylacrylat, Butadien, Isopren oder Kombinationen hiervon ausgewählt ist.

7. Ein geschäumtes biologisch abbaubares Produkt mit einer körnigen Prime- oder Naturstärke, auf welche ein thermoplastisches Polymer aufgepfropft wurde, und zwar ausgewählt aus der Gruppe besthend aus Poly(Methylacrylat), Poly(Butylacrylat), Poly(Styrol), Poly(Methylmethacrylat), und Mischungen hieraus, wobei die Naturstärke aus der Gruppe bestehend aus umfassend Mais, Soja, Weizen, Sorghum, Zuckerhirse, Weizen, Kartoffeln, Gerste, Tapioka und Reis ausgewählt ist, wobei der Anteil des thermoplastischen Polymers zwischen 3 bis 60 Gewichtsprozent des Copolymers beträgt, wobei das geschäumte Produkt eine geschlossene Zellstruktur aufweist, die das Produkt als Verpackungsmaterial geeignet macht, und wobei die erwähnte Naturstärke ein Stärkekuchen oder aber ein breiartiger Stärkekuchen ist, der in einem Feuchtmahlverfahren vor einem Trocknungsprozess erhalten wird.

8. Geschäumtes biologisch abbaubares Produkt nach Anspruch 7, **dadurch gekennzeichnet, daß** die körnige Stärke ausgewählt ist aus einer Gruppe, die allgemeine Stärke, Aedustärke, hydroxypropilierte gewöhnliche Stärke, hydroxypropilierte Amylose-Stärke und Mischungen hiervon enthält.

9. Biologisch abbaubares geschäumtes Produkt nach Anspruch 7, **dadurch gekennzeichnet, daß** das Polymer in einem Anteil 10 bis 50 Gewichtsprozent bezogen auf das Gewicht des Copolymers vorhanden ist.

10. Verfahren zur Verwendung eines Stärkepfropfcopolymers zum Herstellen eines geschäumten Produktes, wobei das Verfahren die folgenden Schritte aufweist:
(a) Herstellung einer Zusammensetzung, die ein Stärkepfropfcopolymer und ein Schaumbildner enthält, wobei das Stärkecopolymer einen Vernetzungsgrad von 30 bis 60% aufweist und aus einer Pime- oder Naturstärke hergestellt ist, wobei die Naturstärke ausgewählt ist aus einer Gruppe umfassend Mais, Soja, Weizen, Sorghum, Zuckerhirse, Weizen, Kartoffeln, Gerste, Tapioka und Reis, wobei die Naturstärke ein Stärkekuchen oder ein breiartiger Stärkekuchen ist, der in einem Feuchtmahlverfahren für den Trockenprozess erhalten wird,
(b) Erhitzen der Zusammensetzung aus dem Stärkepfropfpolymer und dem Schaumbildner, um eine flüssige Mischung und Zellen oder Poren in dieser flüssigen Mischung zu bilden; und
(c) Verfestigen der flüssigen Mischung, um ein festes geschäumtes Produkt zu erhalten.

## Revendications

1. Procédé pour la fabrication d'un copolymère greffé d'amidon, l'amidon réagissant avec un monomère et **caractérisé en ce que** de l'amidon de premier choix est utilisé, ledit amidon étant sélectionné dans un groupe constitué de mais, sorgho, froment, pommes de terre, orge, tapioca et riz, ledit amidon étant un gâteau d'amidon ou un gâteau d'amidon boueux obtenu dans un processus de mouture humide précédant une phase de séchage.

2. Procédé conforme à la revendication 1, dans lequel le monomère est sélectionné à partir du groupe composé de styrène, acrylate de méthyle, acrylate de butyle, butadiène, isopropène et de combinaisons de ces substances.

3. Procédé pour la préparation d'un article plastique par extrusion d'un copolymère greffé d'amidon obtenu par réaction de l'amidon avec un monomère, et **caractérisé en ce que** un copolymère greffé d'amidon constitué d'amidon brut est utilisé, le dit amidon brut étant sélectionné à partir du groupe composé de maïs, sorgho, froment, pommes de terre, orge, tapioca et riz, et consistant en un gâteau d'amidon ou un gâteau d'amidon boueux obtenu dans un processus de mouture humide précédant une phase de séchage.

4. Procédé selon la revendication 3, le monomère étant sélectionné à partir du groupe composé de styrène, acrylate de méthyle, butadiène, isopropène et de combinaisons de ces substances.

5. Copolymère greffé d'amidon comprenant de l'amidon et un monomère, et **caractérisé en ce que** l'amidon est un amidon brut sélectionné à partir du groupe composé de maïs, sorgho, froment, pommes de terre, orge, tapioca et riz, ledit amidon brut étant un gâteau d'amidon ou un gâteau d'amidon boueux obtenu dans un processus de mouture humide précédant une phase de séchage.

6. Le copolymère de la revendication 5, le monomère étant sélectionné à partir du groupe composé de styrène, acrylate de méthyle, acrylate de butyle, butadiène, isopropène et de combinaisons de ces substances.

7. Produit moussé biodégradable comprenant un amidon brut granulé sur lequel a été greffé un polymère thermoplastique sélectionné à partir du groupe composé d'acrylate de (poly)méthyle, d'acrylate de (poly)butyle, de (poly)styrène, de méta-acrylate de (poly)méthyle et de combinaisons de ces substances, l'amidon brut étant sélectionné à partir du groupe composé de maïs, sorgho, froment, pommes de terre, orge, tapioca et riz et le polymère thermoplastique étant présent à raison de 3 à 60 pour-cent en poids de copolymère, ledit produit moussé présentant une structure cellulaire fermée, rendant ainsi ledit produit apte à servir de matériau d'emballage, et **caractérisé en ce que** l'amidon brut est un gâteau d'amidon ou un gâteau d'amidon boueux obtenu dans un processus de mouture humide précédant une phase de séchage.

8. Le produit moussé biodégradable de la revendication 7, l'amidon granulé étant sélectionné à partir du groupe composé d'amidon commun, d'amidon ædu, d'amidon commun hydroxypropylé, d'amidon hydroxypropylé à forte teneur en amylose, ainsi que de combinaisons de ces substances.

9. Le produit moussé biodégradable de la revendication 7, dans lequel le polymère est présent à raison de 10 à 50 pour-cent en poids de copolymère.

10. Méthode d'utilisation d'un copolymère greffé d'amidon pour fabriquer un produit moussé, comprenant les étapes suivantes :
a) Formation d'une composition comprenant un copolymère greffé d'amidon et un agent gonflant, ledit copolymère greffé d'amidon ayant un niveau d'extension de 30 à 60 % et étant constitué d'amidon brut, ledit amidon étant sélectionné à partir du groupe composé de mais, sorgho, froment, pommes de terre, orge, tapioca et riz, ledit amidon brut étant un gâteau d'amidon ou un gâteau d'amidon boueux obtenu dans un processus de mouture humide précédant une phase de séchage ;
b) Chauffage de la composition copolymère greffé d'amidon - agent gonflant pour former un mélange fluide et des cellules dans ledit mélange ; et
c) Solidification du dit mélange fluide pour former un produit moussé solide.
